# EUROPÄISCHE PATENTSCHRIFT

(11) **EP 2 720 351 B1**
(45) Veröffentlichungstag und Bekanntmachung des Hinweises auf die Patenterteilung: **26.04.2017**
(21) Anmeldenummer: 12188383.9
(22) Anmeldetag: 12.10.2012
(51) Int. Cl.: H02K 9/19, H02K 1/20

(54) **Vorrichtung zur Entwärmung eines Bauteils einer elektrischen Maschine mittels mehrerer Kühlschlangen**
Device for cooling a component of an electric machine by means of multiple cooling path
Dispositif de refroidissement d'une machine électrique au moyen de plusieurs serpentins de refroidissement

(43) Veröffentlichungstag der Anmeldung: 16.04.2014
(73) Patentinhaber: Siemens Aktiengesellschaft, 80333 München (DE)
(72) Erfinder: Gadelmeier, Michael-Adolf, 86156 Augsburg (DE); Lefrank, Heinrich, 91126 Schwabach (DE)

(56) Entgegenhaltungen:
- EP-A2- 0 047 633
- EP-A2- 2 110 931
- DE-A1-102009 017 325
- DE-A1-102011 082 353
- FR-A- 1 529 618
- GB-A- 1 211 660

## Beschreibung

Die Erfindung betrifft eine Vorrichtung und ein Verfahren zur Entwärmung eines Blechpakets einer dynamoelektrischen Maschine mittels mehrerer Kühlschlangen. Weiterhin betrifft diese Erfindung ein Blechpaket, einen Rotor sowie einen Stator einer elektrischen Maschine, einen Torquemotor sowie einen Linearmotor mit einer derartigen Vorrichtung.

Stromdurchflossene Wicklungen in Blechpaketen, wie sie beispielsweise in dynamoelektrischen Maschinen zum Einsatz kommen, erwärmen, beispielsweise durch Wirbelströme, das Blechpaket, in welchem sie eingefügt sind, oft erheblich. Daher ist insbesondere für elektrische Maschinen im Dauereinsatz eine ausreichende Kühlung notwendig, um eine Überhitzung einzelner Bauteile zu vermeiden. Eine besonders effiziente Kühlung ist das Durchleiten einer Kühlflüssigkeit wie Wasser oder Öl durch Rohre, in thermischem Kontakt mit dem Blechpaket stehen. Zur Entwärmung von elektrischen Maschinen ist die Verwendung von Öl oftmals einer Verwendung von Wasser als Kühlmittel vorzuziehen, da Öl den elektrischen Strom nicht leitet und in der Regel einen höheren Siedepunkt als Wasser aufweist. Es gilt jedoch zu beachten, dass Siliconschläuche für die Durchleitung von ölhaltigen Kühlmittel oder einigen anderen wässrigen Lösungen nicht geeignet sind.

Aus DE 101 31 119 A1 ist es bekannt, ein Motorteil, insbesondere eines Linearmotors, durch eine Kühlschlange zu entwärmen, durch die ein Kühlmittel fließt. Die Kühlschlange ist mäanderförmig als flächenartiges Gebilde gebogen und an der entsprechenden Fläche des Trägerkörpers befestigt. Hierbei ist ein Verguss der an das Motorteil angebrachten Kühlschlangen bevorzugt.

EP 0 047 633 A2 beschreibt ein Heizung, insbesondere für ein Gewächshaus, mit mäandergeformten Rohrleitungen.

EP 2 110 931 A2 beschreibt einen Stator einer elektrischen Maschine, wobei die Außenseite des Stators in Sektoren aufgeteilt ist und wobei die Sektoren mit mäandergeformten Kühlleitungen bestückt sind.

FR 1 529 618 A beschreibt einen mäanderförmigen Verlauf von Kühlschlangen, wobei der zu kühlende Bereich in einzelne Unterbereiche eingeteilt ist.

DE 20 2009 017 325 A1 beschreibt eine Flüssigkeitskühlung für einen Generator einer Windenergieanlage, wobei der Generator mit Axialrohren zur Durchleitung von Kühlmittel ausgestattet ist.

Zusätzlich ist aus DE 196 04 643 A1 bekannt, ein Teil eines Linearmotors mit mehreren Kühlkreisläufen zu versehen, welche das Maschinenteil abschnittsweise mäanderförmig durchlaufen.

Außerdem offenbart die GB 1 211 660 A eine Vorrichtung zur Entwärmung eines Blechpakets einer dynamoelektrischen Maschine, mittels einer ersten Kühlschlange und mittels mindestens einer weiteren Kühlschlange, wobei die weitere Kühlschlange, über Distanzabschnitte miteinander verbundene, mäandergeformte Abschnitte, zur Entwärmung einzelner, nicht benachbarter Bereiche des Blechpakets aufweist, wobei die erste Kühlschlange nur einen mäandergeformten Abschnitt aufweist, der zur Entwärmung des Blechpakets vorgesehen ist und wobei die weitere Kühlschlange, zwei mäanderförmige Abschnitte aufweist, um das Blechpaket in den Bereichen zu entwärmen, zu deren Entwärmung die erste Kühlschlange nicht vorgesehen ist.

Der Erfindung liegt die Aufgabe zugrunde, eine möglichst gleichmäßige Entwärmung eines Blechpakets zu erreichen und zugleich Öl als Kühlmittel einzusetzen. Gleichzeitig soll die notwendige Anzahl der Kühlschlangen und damit der Anschlüsse niedrig gehalten werden.

Diese Aufgabe wird durch eine Vorrichtung zur Entwärmung eines Blechpakets einer dynamoelektrischen Maschine gemäß dem Anspruch 1 gelöst. Die Unterteilung des Bauteils in Bereiche, welche von unterschiedlichen Abschnitten einer Kühlschlange entwärmt werden, birgt den Vorteil einer besonders gleichmäßigen Entwärmung. Falls nur eine Kühlschlange das gesamte Blechpaket entwärmen würde, würde aufgrund der Erwärmung des Kühlmittels während des Durchlaufs durch die Kühlschlange die Entwärmung derjenigen Bereiche vermindert sein, welche diejenigen Abschnitte der Kühlschlange aufweisen, in denen das Kühlmittel schon eine erhöhte Temperatur aufweist. Bei einer Verwendung von mehreren nebeneinander positionierten Kühlschlagen, welche parallel mit einem Kühlmittel gespeist werden und nur jeweils benachbarte Bereiche entwärmen, würde zwar die Gleichmäßigkeit der Entwärmung verbessert - aber gleichzeitig die Anzahl der Anschlüsse ansteigen. Zudem tritt gegebenenfalls die Notwendigkeit von Verbindungsschläuchen auf innerhalb der elektrischen Maschine auf, was die Wahl des Kühlmittels einschränkt. Des Weiteren sind undichte Stellen im Kühlkreislauf oft an Anschlüssen und Schlauchkupplungen lokalisiert. Daher sollte die Anzahl der Anschlüsse, insbesondere innerhalb des Gehäuses einer elektrischen Maschine, möglichst gering sein. Aufgrund beschränkter Platzverhältnisse innerhalb oder außerhalb einer elektrischen Maschine ist zudem nur eine begrenzte Anzahl an Zu- und Ableitungen zu den Kühlschlangen realisierbar. Durch die beschriebene Vorrichtung wird sowohl die gleichmäßige Entwärmung des Blechpakets verbessert sowie gleichermaßen auch die Zahl der Anschlüsse erheblich reduziert. Zudem kann auf Verbindungsschläuche innerhalb der elektrischen Maschine verzichtet werden, und somit ist diese Vorrichtung auch besonders zur Verwendung von Öl als Kühlmittel geeignet.

Die Aufgabe wird weiter durch ein Verfahren zur Entwärmung eines Blechpakets einer dynamoelektrischen Maschine mittels einer derartigen Vorrichtung gelöst, wobei die Kühlrohre in vorgefertigte Aussparungen formschließend eingepasst werden. Dieses Verfahren zur Entwärmung eines Blechpaketes eint der Vorzug einer effizienten Entwärmung eines Bauteils mit einem kostengünstigen Herstellungsverfahren einer solchen Vorrichtung. Die für die Kühlrohre vorgesehene Nut kann während des Stanzprozesses in einfacher Art und Weise mit erzeugt werden. Die formschließende Verbindung von dem Blechpaket und dem Kühlrohr lässt sich am einfachsten durch einen Pressvorgang ausführen. Dabei wird die Form der Kühlrohre an die Aussparung im Blechpaket angeglichen.

Bei einer vorteilhaften Ausgestaltungsform weist die erste Kühlschlange nur einen mäandergeformten Abschnitt auf, der zur Entwärmung des Bauteil vorgesehen ist, wobei die weitere Kühlschlange mindestens zwei mäanderförmige Abschnitte aufweist, um das Blechpaket in den Bereichen zu entwärmen, zu deren Entwärmung die erste Kühlschlange nicht vorgesehen ist. Diese Ausgestaltung ist zum Einsatz in einer elektrischen Maschine vorzusehen, in der das zu kühlende Blechpaket vorteilsbehaftet in zwei, nicht notwendig zusammenhängende Bereiche eingeteilt werden kann und der mittlere Bereich von einer Kühlschlange entwärmt wird und die der andere Bereich von einer weiteren Kühlschlange, die den Bereich der einen Kühlschlange durch ein Distanzabschnitt überbrückt, entwärmt werden. Diese vereinfachte Vorrichtung kann auch eingesetzt werden, falls beispielsweise nur ein bestimmter Bereich gesondert entwärmt werden soll und ein anderer Bereich nur in geringerem Maße erwärmt werden muss. Insbesondere in diesem letzten Fall sorgt diese Ausführung für eine besonders gleichmäßige Temperatur des Bauteils.

Bei einer weiteren vorteilhaften Ausgestaltungsform sind die Kühlschlangen aus jeweils einem Rohrstück gearbeitet. Die Fertigung der Kühlschlangen aus einem einzelnen Rohr trägt zur Vermeidung von undichten Stellen bei. Zusätzlich ist die Anzahl von Verbindungskupplungen reduziert im Vergleich zu Kühlschlangen mit mehreren Komponenten.

Die Entwärmung kann noch weiter verbessert werden, indem die Durchlaufrichtung des Kühlmittels durch die erste und die weitere Kühlschlange in jeweils unterschiedliche Richtungen vorgesehen ist. Eine unterschiedliche Durchlaufrichtung des Kühlmittels durch die einzelnen Kühlschlangen sorgt dafür, dass beide Seiten des Blechpakets - sowie auch der einzelnen Bereiche - gleichmäßig entwärmt werden, da die Bereiche, in denen das Kühlmittel schon eine höhere Temperatur aufweist, von Bereichen umgeben sind, in denen das Kühlmittel nach einen nur kurzen Weg durch die Kühlschlange eine nur mäßig höhere Temperatur aufweist als nach einen nahezu vollständigen Durchlauf durch die Kühlschlange.

Bei einer weiteren vorteilhaften Ausgestaltung der Vorrichtung überlappen sich die Bereiche des Blechpakets, für welche jeweils ein mäandergeformter Bereich einer Kühlschlange vorgesehen ist. Die Möglichkeit der Überlappung kann auf einer oder auf mehreren Ebenen gegeben sein. In ersten Fall beispielsweise beschreiben die Kühlschlangen ein schwach ausgeprägtes Zickzackmuster wobei die Windungen teilweise übereinander verlaufen. Im zweiten Fall verlaufen die Kühlschlangen auf zwei, vorzugsweise parallelen, Ebenen, welche dann in der Projektion teilweise überlappen. Dies ist insbesondere für Bauteile mit einer stark lokalisierten Wärmeentwicklung vorteilsbehaftet, falls dies die Konstruktion des Blechpakets der elektrischen Maschine zulässt.

Eine weitere vorteilhafte Ausgestaltung ist eine Vorrichtung, bei welcher der Abstand sowie der Durchmesser der parallel verlaufenden Kühlrohre im mäandergeformten Abschnitt der Kühlschlangen variabel gestaltet sind. Oftmals sind einzelne Bereiche von Blechpaketen stärker von der auftretenden Erwärmung betroffen als andere Bereiche. In stärker erwärmten Bereichen kann eine Verminderung des Abstandes der zur Entwärmung vorgesehenen Rohrleitungen der Kühlschlange zu einer bereichsweise besseren Entwärmung beitragen. Weiterhin können konstruktionsbedingt Bereiche in einem Blechpaketen auftreten, in denen - beispielsweise aufgrund der notwendigen Stabilität - die Kühlschlangen mit einem geringeren Durchmesser zum Einbau verwenden. Durch eine höhere Durchflussgeschwindigkeit ist dann die thermische Kontaktfläche zwischen Bauteil und dem Kühlmittel ausgleichbar.

Eine besonders vorteilhafte Ausführung dieser Erfindung ist eine Vorrichtung, bei der erste mäandergeformte Abschnitt der Kühlschlangen sechs Windungen - und nach jeweils einem Distanzabschnitt mindestens ein nachfolgender mäandergeformter Abschnitt fünf oder weniger Windungen aufweist. Diese Gestaltungsmöglichkeit ist insbesondere in elektrisch rotierenden Maschinen einsetzbar, da die Enden der Kühlschlangen sich dann auf unterschiedlichen Seiten des Blechpakets befinden, falls eine ungerade Anzahl an mäandergeformten Abschnitten mit fünf Windungen eingesetzt wird. Somit sind die Verbindungen zu den Zu - und Ableitungen des Kühlmittels gebündelt und können vorteilhaft an das Kühlungssystem angeschlossen werden. Zusätzlich beachtet die abnehmende Anzahl der Windungen, dass mit zunehmender Durchlaufstrecke die Temperatur des Kühlmittels ansteigt.

Durch den Anstieg der Temperatur des Kühlmittels ist die Effizienz der Entwärmung vermindert, folglich ist der zu entwärmende Bereich zu verkleinern sowie gegebenenfalls mit einem mäandergeformten Abschnitt einer weiteren Kühlschlange zu entwärmen, deren durchlaufendes Kühlmittel eine noch geringe Temperatur aufweist. Besonders vorteilhaft hat sich eine Kombination aus jeweils zwei Kühlschlangen herausgestellt, welches einmal sechs und einmal fünf Windungen aufweist. Je nach Größe des zu entwärmenden Blechpakets können eine oder mehrere dieser Kombinationen Einsatz finden, wobei diese vorzugsweise parallel von einem Kühlmittel durchlaufen werden können. In der Herstellung ergibt sich der Vorteil, dass unterschiedliche Größen eines Blechpakets, beispielsweise verschiedene Umfänge von Torquemotoren, mit einer Art von Kühlschlange ausgestattet werden können.

Eine Anwendung ist ein Blechpaket einer elektrischen Maschine, das mit einer Vorrichtung zur Entwärmung gemäß einem der vorangehenden Ansprüche ausgestattet ist. Ein Blechpaket als Träger von Wicklungen wird beispielsweise durch auftretende Wirbelströme bei Betrieb fortlaufend erwärmt. Um einer Überhitzung Einhalt zu gebieten, ist die erfindungsgemäße Vorrichtung besonders gut geeignet, da die Kühlschlangen einfach in Nuten eingepresst werden können, die zuvor durch einen Stanzprozess in die Bleche eingearbeitet wurden, und erhalten stehen somit in gutem thermischen Kontakt mit dem Bauteil. Gleichzeitig ist die Entwärmung in gleichmäßiger Art und Weise durch die Aufteilung des Bauteils in einzeln entwärmte Bereiche gegeben.

Ein weiteres Anwendungsgebiet dieser Vorrichtung ist ein Stator oder einen Rotor einer elektrischen Maschine, welches, wie im letzten Abschnitt ausgeführt, durch Reibung oder elektrische Effekte oft in erheblichem Masse entwärmt werden muss, um einen gleichmäßigen Betrieb der elektrischen Maschine zu gewährleisten.

Diese erfindungsgemäße Vorrichtung zur Entwärmung eignet sich für einen Einsatz in einer Dynamoelektrische Maschine, insbesondere Torquemotor oder Linearmotor, aufweisend einen Rotor und/oder einem Stator. Ein Elektromotor oder ein Generator, insbesondere in der Ausführung eines Torquemotors zeichnet sich durch Blechpakete aus, welche eine Vielzahl von Wicklungen aufweisen. Falls diese Motoren ein hohes Leistungsvermögen bereitstellen, ist eine Entwärmung dieser Blechpakete, insbesondere im Stator, in hohem Maße geboten um keine thermisch bedingten Leistungsverluste oder Ausfälle des Motors zu riskieren. Besondere Beachtung gilt hierbei der gleichmäßigen Entwärmung, weshalb diese Vorrichtung, wie bereits ausgeführt, besonders gut geeignet ist.

Im Folgenden wird die Erfindung anhand der in den Figuren dargestellten Ausführungsbeispiele an einem Bauteil, das erfindungsgemäss als Blechpaket ausgebildet ist, näher beschrieben und erläutert.

Es zeigen:
- FIG 1: einen möglichen Verlauf der Kühlschleifen in einem Bauteil,
- FIG 2: den Spezialfall von nur zwei Kühlschlangen, sowie
- FIG 3: den Spezialfall von zwei Kühlschlangen für eine bevorzugte Verwendung in einem Torquemotor.

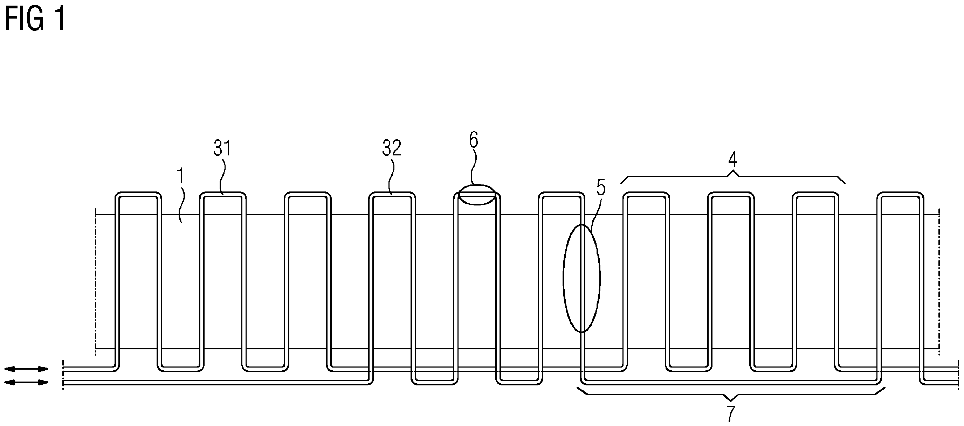

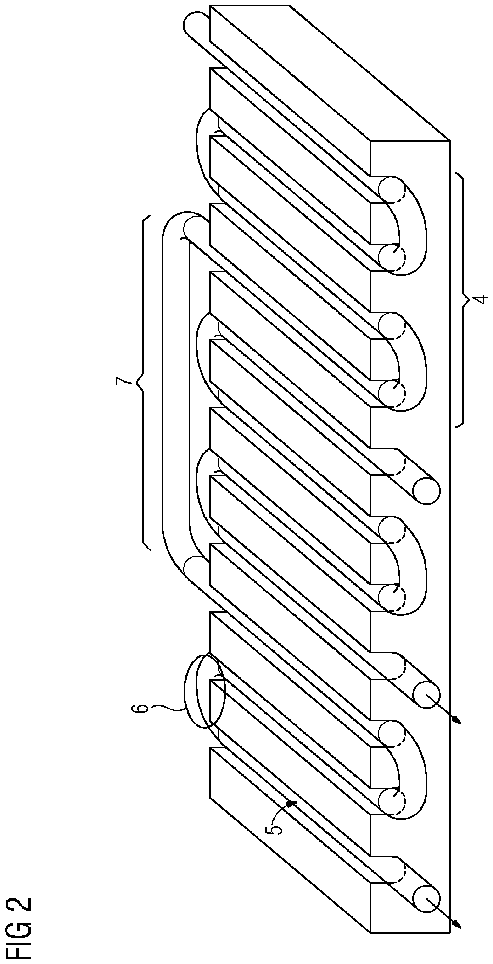

FIG 1 zeigt einen möglichen Verlauf der Kühlschleifen in einem Bauteil. Dabei bezeichnet 1 das Bauteil, in welches die Kühlschlangen 31, 32 eingefasst sind. Die Kühlschlange 31, 32 durchläuft bereichsweise mäandergeformt das Bauteil 1. Die Kühlschlangen bestehen aus mäandergeformten Abschnitten 4, sowie Distanzabschnitte 7. Als Distanzabschnitte 7 werden hier die Abschnitte bezeichnet, die nicht mäandergeformt sind. Der mäandergeformten Abschnitt einer Kühlschlange besteht aus Kühlrohren 5 und Windungen 6. Die Kühlrohre stehen vorzugsweise in unmittelbaren Kontakt mit dem Bauteil 1. Die Windungen 6 verbinden die Kühlrohre durch Umlenkungen. Die Umlenkungen können halbkreisförmig, oval oder eckig gestaltet sein. Diese Abbildung zeigt zwar die Kühlschlangen auf der Oberfläche des Bauteils. Es sind aber weitere Möglichkeiten bekannt, einen guten thermischen Kontakt zwischen dem Bauteil und der Kühlschlange herzustellen, wie auch FIG 2 aufzeigt. Die Doppelpfeile nahe den Enden der Kühlschlangen sollen die möglichen Durchflussrichtungen des Kühlmittels illustrieren.

FIG 2 zeigt den Spezialfall der Vorrichtung, dass nur zwei Kühlschlangen 31, 32 zur Entwärmung des Bauteils beitragen. Dabei besitzt eine der Kühlschlangen nur einen mäandergeformten Abschnitt 4, der im mittleren Bereich des Bauteils 1 lokalisiert ist. Die andere Kühlschlange besitzt zwei mäandergeformte Abschnitte 4, welche für die Entwärmung der beiden äußeren Bereiche des Bauteils 1 vorgesehen ist. In diesem Bild sind die Kühlschlangen in Nuten eingefügt, so dass eine formschlüssige Verbindung zwischen den Kühlschlangen 31, 32 und dem Bauteil 1 für eine effektive Entwärmung sorgt. Im Falle eines zu entwärmenden Bleckpaketes einer elektrischen Maschine ist die Richtung des Kühlrohre 5 orthogonal zu den Blechen zu wählen wie dies durch die Schraffierung des Bauteils 1 angedeutet ist, da diese Nuten bei der Herstellung der Bleche, beispielsweise durch einen Stanzprozess, ohne erheblichen Mehraufwand im Herstellungsprozess berücksichtigt werden können.

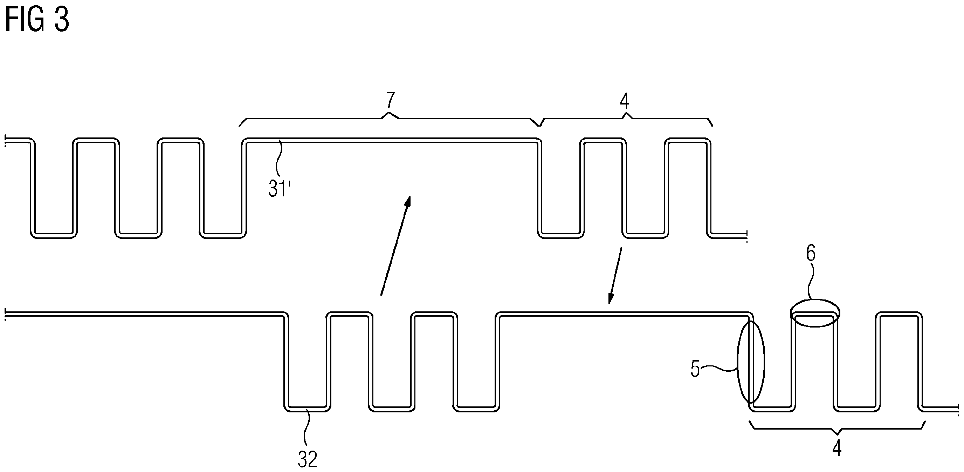

FIG 3 beschreibt das Zusammenspiel zweier Kühlschlangen, wie dies insbesondere in einem Torquemotor oder einem Linearmotor Verwendung finden kann. Diese Skizze lehnt sich an den Patentanspruch 7 an, wobei beide Kühlschlangen einen mäandergeformten Abschnitt 4 mit sechs Windungen 6 und eine mit fünf Windungen 6 aufweisen. Je nach Umfang des zu entwärmenden Bauteils 1, sowie der entstehenden Wärmemenge können eine oder mehrere dieser Kombinationen für die Entwärmung des Bauteils 1 verwendet werden. Die flächigen Pfeile sollen verdeutlichen, dass der mäandergeformte Abschnitt 4 der Kühlschlange 32 für den Bereich vorgesehen ist, der von der Kühlschlange 31 durch den Distanzabschnitt 7 nicht direkt entwärmt wird. Umgekehrt wird der mäandergeformte Abschnitt 4 mit fünf Windungen 6 der Kühlschlange 31 in dem Bereich des Bauteils 1 zur Entwärmung eingesetzt, welcher von dem Distanzabschnitt 7 der Kühlschlange 32 umgangen wird.

Zusammenfassend betrifft die Erfindung eine Vorrichtung zur Entwärmung eines Bauteils 1, insbesondere eines Blechpakets einer dynamoelektrischen Maschine, mittels einer ersten Kühlschlange 31 und mittels mindestens einer weiteren Kühlschlange 32. Dabei sind die Kühlschlangen mit mäandergeformten Abschnitten 4, welche über Distanzabschnitte 7 verbunden sind, ausgestattet. Diese mäandergeformten Abschnitte 4 dienen zur Entwärmung einzelner - nicht benachbarter Bereiche des Bauteils 1, wobei die Distanzabschnitte 7 der ersten Kühlschlange 31 zur Überbrückung derjenigen Bereiche vorgesehen ist, zu deren Entwärmung der mäandergeformte Abschnitt 4 der weiteren Kühlschlange 32 vorgesehen ist. Umgekehrt dienen die Distanzabschnitte 7 der weiteren Kühlschlangen 32 zur Überbrückung der Bereiche, welche durch die mäandergeformten Abschnitte 4 der ersten Kühlschlange 31 zur Entwärmung vorgesehen sind.

## Patentansprüche

1. Vorrichtung zur Entwärmung eines Blechpakets einer dynamoelektrischen Maschine, mittels einer ersten Kühlschlange (31) und mittels mindestens einer weiteren Kühlschlange (32), wobei die erste und die weitere Kühlschlange, über Distanzabschnitte (7) miteinander verbundene, mäandergeformte Abschnitte (4), zur Entwärmung einzelner, nicht benachbarter Bereiche des Blechpakets (1), aufweisen, wobei die Distanzabschnitte (7) der ersten Kühlschlange (31) zur Überbrückung derjenigen Bereiche vorgesehen sind, zu deren Entwärmung der mäandergeformte Abschnitt (4) der weiteren Kühlschlange (32) vorgesehen ist, und wobei Distanzabschnitte (7) der weiteren Kühlschlange zur Überbrückung der Bereiche vorgesehen sind, welche durch die mäandergeformten Abschnitte (4) der ersten Kühlschlange (31) zur Entwärmung vorgesehen sind.

2. Vorrichtung nach einem der Ansprüche 1, wobei die Kühlschlangen (31, 32) aus jeweils einem Rohrstück gearbeitet sind.

3. Vorrichtung nach einem der vorangehenden Ansprüche, wobei die Durchlaufrichtung des Kühlmittels durch die erste und die weitere Kühlschlange (31,32) in jeweils unterschiedliche Richtungen vorgesehen ist.

4. Vorrichtung nach einem der vorangehenden Ansprüche, wobei sich die Bereiche des Blechpakets (1), für welche jeweils ein mäandergeformter Bereich einer Kühlschlange (31, 32) vorgesehen ist, überlappen.

5. Vorrichtung nach einem der vorangehenden Ansprüche, wobei der Abstand sowie der Durchmesser der parallel verlaufenden Kühlrohre (5) im mäandergeformten Abschnitt (4) der Kühlschlangen (31, 32) variabel gestaltet ist.

6. Vorrichtung nach vorangehenden Ansprüchen, wobei der erste mäandergeformte Abschnitt (4) sechs Windungen (6) - und nach jeweils einem Distanzabschnitt (7) mindestens ein nachfolgender mäandergeformte Abschnitt (4) fünf oder weniger Windungen (6) aufweist.

7. Blechpaket einer elektrischen Maschine, das mit einer Vorrichtung zur Entwärmung gemäß einem der vorangehenden Ansprüche ausgestattet ist.

8. Stator einer elektrischen Maschine, der mit einer Vorrichtung gemäß einem der Ansprüche 1 bis 6 ausgestattet ist.

9. Dynamoelektrische Maschine, insbesondere Torquemotor oder Linearmotor, aufweisend einem Stator gemäß Anspruch 8.

10. Verfahren zur Entwärmung eines Blechpakets einer dynamoelektrischen Maschine, mittels einer Vorrichtung gemäß einem der Ansprüche 1 bis 6, wobei die Kühlrohre (5) in vorgefertigte Aussparungen formschließend eingepasst werden.

## Claims

1. Device for cooling a laminated core of a dynamo, by means of a first cooling coil (31) and by means of at least one further cooling coil (32), wherein the first and the further cooling coils have serpentine-shaped sections (4) connected to each other by distance sections (7) for cooling individual non-neighbouring areas of the laminated core (1), wherein the distance sections (7) of the first cooling coil (31) are intended to bridge those areas for the cooling of which the serpentine-shaped section (4) of the further cooling coil (32) is provided, and wherein distance sections (7) of the further cooling coils are intended to bridge the areas for the cooling of which the serpentine-shaped sections (4) of the first cooling coil (32) are provided.

2. Device according to claim 1, wherein the cooling coils (31, 32) are each made of one piece of pipe.

3. Device according to one of the preceding claims, wherein the respective direction of flow of the coolant through the first and the further cooling coils (31, 32) is provided in different directions in each case.

4. Device according to one of the preceding claims, wherein the areas of the laminated core (1), for which a serpentine-shaped area of a cooling coil (31, 32) is provided in each case, overlap.

5. Device according to one of the preceding claims, wherein the spacing and also the diameter of the parallel cooling pipes (5) in the serpentine-shaped section (4) of the cooling coils (31, 32) are designed to be variable.

6. Device according to the preceding claims, wherein the first serpentine-shaped section (4) has six turns (6) - and after a distance section (7) in each case at least one subsequent serpentine-shaped section (4) has five or fewer turns (6).

7. Laminated core of an electric machine, which is equipped with a device for cooling in accordance with one of the preceding claims.

8. Stator of an electric machine, which is equipped with a device in accordance with one of claims 1 to 6.

9. Dynamo, especially torque motor or linear motor, having a stator in accordance with claim 8.

10. Method for cooling a laminated core of a dynamo, by means of a device in accordance with one of claims 1 to 6, wherein the cooling pipes (5) are fitted into prefabricated recesses enclosing their shape.

## Revendications

1. Dispositif de refroidissement d'un paquet de tôles d'une machine dynamo-électrique au moyen d'un premier serpentin (31) de refroidissement et au moyen d'au moins un autre serpentin (32) de refroidissement, le premier et l'autre serpentin de refroidissement ayant, pour le refroidissement de parties individuelles non voisines du paquet (1) de tôles, des tronçons (4) sinueux, reliés entre eux par des tronçons (7) de mise à distance, les tronçons (7) de mise à distance du premier serpentin (31) de refroidissement étant prévus pour le pontage des parties pour le refroidissement desquelles le tronçon (4) sinueux de l'autre serpentin (32) de refroidissement est prévu et dans lequel des tronçons (7) de mise à distance de l'autre serpentin de refroidissement sont prévus pour le pontage des parties qui sont prévues pour le refroidissement par les tronçons (4) sinueux du premier serpentin (31) de refroidissement.

2. Dispositif suivant la revendication 1, dans lequel les serpentins (31, 32) de refroidissement sont usinés à partir respectivement d'une pièce tubulaire.

3. Dispositif suivant l'une des revendications précédentes, dans lequel la direction de passage du fluide de refroidissement dans le premier et dans l'autre serpentin (31, 32) de refroidissement est prévue dans des directions différentes.

4. Dispositif suivant l'une des revendications précédentes, dans lequel les parties du paquet (1) de tôles, pour lesquelles respectivement une partie sinueuse d'un serpentin (31, 32) de refroidissement est prévue, se chevauchent.

5. Dispositif suivant l'une des revendications précédentes, dans lequel la distance ainsi que le diamètre des tubes (5) de refroidissement, s'étendant parallèlement, est variable dans le tronçon (4) sinueux des serpentins (31, 32) de refroidissement.

6. Dispositif suivant l'une des revendications précédentes, dans lequel le premier tronçon (4) sinueux a six spires (6) et après respectivement un tronçon (7) de mise à distance au moins un tronçon (4) sinueux venant ensuite a cinq spires ou moins de cinq spires (6).

7. Paquet de tôles d'une machine électrique, qui est équipé d'un dispositif de refroidissement suivant l'une des revendications précédentes.

8. Stator d'une machine électrique, qui est équipé d'un dispositif suivant l'une des revendications 1 à 6.

9. Machine dynamo-électrique, notamment moteur à couple ou moteur linéaire, ayant un stator suivant la revendication 8.

10. Procédé de refroidissement d'un paquet de tôles d'une machine dynamo-électrique au moyen d'un dispositif suivant l'une des revendications de 1 à 6, dans lequel on introduit les tubes (5) de refroidissement à fermeture par la forme dans des évidements préparés à l'avance.
